# DEMANDE DE BREVET EUROPEEN

(11) **EP 1 071 270 A1**
(43) Date de publication de la demande: **24.01.2001**
(21) Numéro de dépôt: 00401933.7
(22) Date de dépôt: 05.07.2000
(51) Int. Cl.: H04M 17/00, H04M 17/02, G07F 7/00

(54) **Borne publique d'accès à un réseau informatique**

(30) Priorité: 06.07.1999 FR 9908721
(71) Demandeur: FRANCE TELECOM, 75015 Paris (FR)
(72) Inventeur: Ple, Jean, 91480 Quincy sous Senart (FR); Campagnet, Jean-Marie, 91070 Bondoufle (FR); Lezin, Jean-Pierre, 91080 Courcouronnes (FR)
(74) Mandataire: Jacobson, Claude

(57) **Abrégé**

Cette borne publique comporte des moyens (24) de raccordement de la borne à un réseau téléphonique analogique (RTC), une unité centrale (12) dotée d'organes périphériques (14, 16, 18) assurant une interface homme/machine, un algorithme de navigation sur le réseau informatique stocké en mémoire et un lecteur (22) de cartes de paiement de télécommunications raccordé à des moyens (26) automatiques d'établissement d'une liaison téléphonique avec un centre serveur et de maintien de ladite liaison téléphonique en fonction d'un crédit d'appel disponible, activés tant qu'une carte de paiement est introduite dans le lecteur.

Elle est dotée de moyens de raccordement à un réseau numérique (RNIS), comportant un relais (38) piloté par l'unité centrale (12) de manière à établir une communication entre cette dernière et le réseau numérique tant que la liaison avec le centre serveur est maintenue.

## Description

La présente invention se rapporte à une borne publique d'accès à un réseau informatique, en particulier un réseau de type « Internet ».

Une telle borne est destinée à être placée en un emplacement public pour être librement utilisée par le public en utilisant une carte de paiement, par exemple une carte téléphonique ou une carte bancaire.

Pour ce faire, cette borne comporte, de façon classique, des moyens de raccordement à un réseau téléphonique analogique, une unité centrale dotée d'organes périphériques assurant une interface homme/machine, un algorithme de navigation sur le réseau informatique stocké en mémoire, et un lecteur de cartes de paiement de télécommunications raccordé à des moyens automatiques d'établissement d'une liaison téléphonique avec un centre serveur et de maintien de ladite liaison téléphonique en fonction d'un crédit d'appel disponible, activés tant qu'une carte de paiement est introduite dans le lecteur.

Ce type de borne comporte un certain nombre d'inconvénients, notamment en raison du fait que le transfert de fichiers vers la borne est relativement long, dans la mesure où ils sont véhiculés sur une ligne analogique du réseau téléphonique.

Le but de l'invention est de pallier cet inconvénient.

Elle a donc pour objet une borne publique d'accès à un réseau informatique du type précité, caractérisée en ce qu'elle est dotée de moyens de raccordement à un réseau numérique, comportant un relais piloté par l'unité centrale de manière à établir une communication entre cette dernière et le réseau numérique tant que la liaison téléphonique avec le centre serveur est maintenue.

Dans différents modes de réalisation, la borne d'accès selon l'invention comporte une ou plusieurs des caractéristiques suivantes, prises isolément ou selon toutes les combinaisons techniquement possible :
- l'unité centrale est raccordée à une carte adaptée pour mettre l'unité centrale en communication avec le réseau numérique (RNIS) et pilotant le relais de manière à établir ladite communication avec le réseau numérique dès réception d'une impulsion de taxation reçue en provenance d'un réseau de téléphonie publique auquel le centre serveur est connecté ;
- au cours de la liaison téléphonique avec le centre serveur et la borne, ces derniers échangent des signaux de manière à simuler une communication pour maintenir la liaison téléphonique :
- elle comporte en outre, stockées en mémoire, des données accessibles gratuitement par un utilisateur ;
- les signaux échangés entre le serveur et la borne constituent des moyens de transfert de ces données pour leur stockage en mémoire ;
- elle comporte en outre des moyens pour piloter directement le relais en l'absence de communication téléphonique établie avec le centre serveur, notamment pour la mise à jour des données stockées dans la borne ;
- le centre serveur est un centre serveur de type télématique.

D'autres caractéristiques et avantages ressortiront de la description suivante, donnée uniquement à titre d'exemple, et faite en référence aux dessins annexés :
- La figure 1 est une vue en perspective d'une borne d'accès selon l'invention ;
- La figure 2 est un schéma synoptique illustrant schématiquement la constitution de la borne d'accès de la figure 1, et
- La figure 3 est un organigramme illustrant le fonctionnement de la borne des figures 1 et 2.

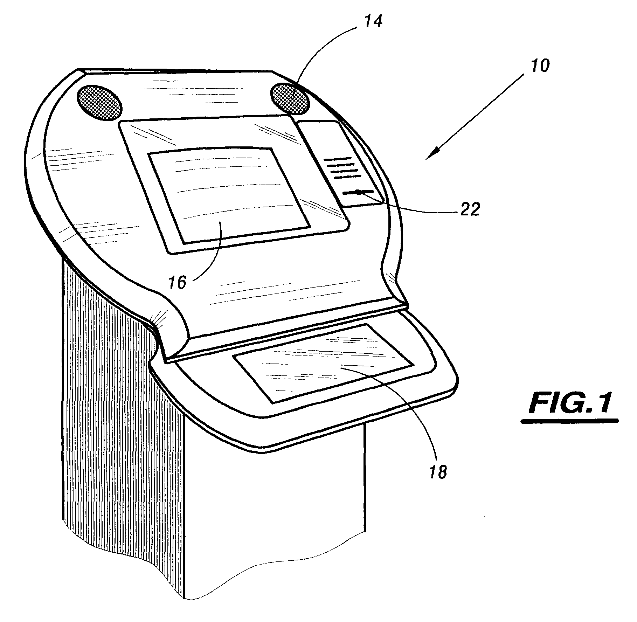

Sur la figure 1, on a représenté une vue schématique en perspective d'une borne d'accès à un réseau informatique, en particulier « Internet », conforme à l'invention, désignée par la référence numérique générale 10.

Elle est destinée à être placée en un emplacement public pour être librement accessible au public moyennant l'utilisation d'une carte de paiement de télécommunications. Comme cela est classique, une telle carte peut être constituée par une carte téléphonique de type « télécarte », une carte vendue par les exploitants des réseaux de téléphonie, ou une carte bancaire. Dans ce dernier cas, la borne incorpore des moyens connus d'authentification de la carte et d'identification du porteur.

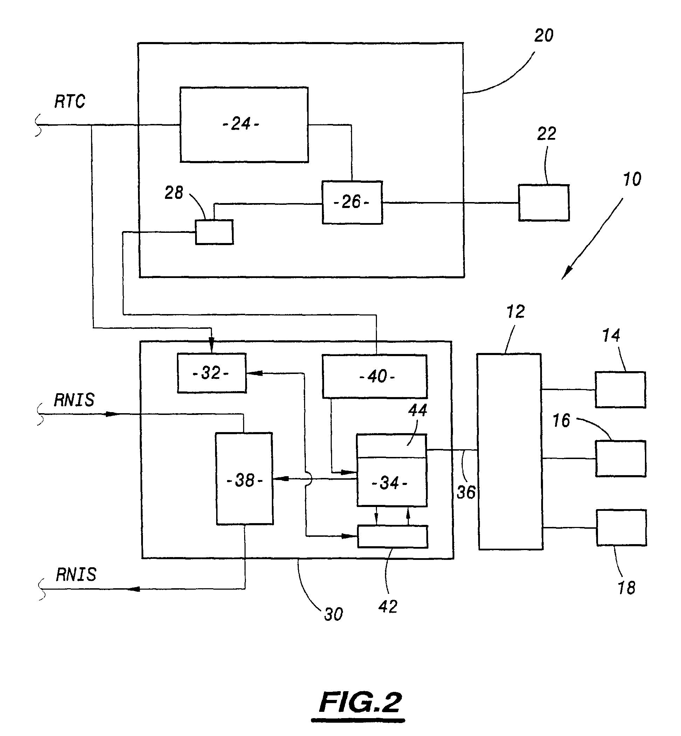

En se référant également à la figure 2, la borne 10 est principalement constituée par une unité centrale 12 à laquelle sont raccordés des organes périphériques assurant une interface homme/machine, à savoir des haut-parleurs tels que 14, un écran 16 et un clavier 18, ainsi que par des éléments de téléphonie publique constitués principalement par une carte mère 20 à laquelle est raccordé un lecteur 22 de cartes de paiement de télécommunication.

Un algorithme de navigation sur le réseau informatique est stocké en mémoire dans l'unité centrale 12.

La carte mère 20 est constituée par une carte de « Publiphone » de type classique. Elle ne sera donc pas décrite en détail par la suite. On notera toutefois qu'elle est dotée d'une carte de connexion externe 24 pour le raccordement de la borne à un réseau téléphonique analogique RTC et de circuits de téléphonie 26 permettant l'établissement d'une liaison téléphonique avec un centre serveur appelé par l'intermédiaire du réseau téléphonique RTC par composition du numéro téléphonique du serveur stocké en mémoire dans la borne 10 et le maintien de cette liaison.

On voit par ailleurs sur la figure 2, qu'à un bornier de raccordement 28 connecté aux circuits de téléphonie 26, utilisé classiquement pour le raccordement d'un combiné téléphonique, est raccordée une carte fille 30 elle-même connectée à l'unité centrale 12 pour la mise en communication de cette dernière avec un réseau numérique. Par réseau numérique on entend dans le cadre de la présente description, un réseau véhiculant des informations numériques, notamment un réseau téléphonique numérique RNIS, un réseau local, un réseau de câblo-opérateurs.

La carte fille 30 est également raccordée au réseau téléphonique analogique RTC au moyen d'un modem 32.

Elle comporte un micro-contrôleur 34 raccordé à l'unité centrale 12 par une liaison série 36, par exemple de type RS232, et un relais 38 piloté par le micro-contrôleur 34 et branché sur une ligne numérique du réseau téléphonique numérique RNIS pour établir une communication entre l'unité centrale 12 et ce réseau RNIS dès établissement d'une liaison téléphonique avec le serveur sur la ligne analogique du réseau RTC.

Une commande directe du relais 38 par l'unité centrale 12, c'est à dire en l'absence de liaison téléphonique, est possible via cette liaison série 36 de manière à établir une communication entre la borne et le réseau numérique, notamment pour une mise à jour de données stockées dans la borne comme cela sera décrit par la suite, pour une utilisation gratuite de la borne, ou une télémaintenance de cette dernière.

La carte fille 30 est complétée par un circuit 40 de détection de tonalité raccordé au micro-contrôleur 34 et recevant, en entrée, les signaux recueillis sur le bornier de raccordement 28 ainsi que par des circuits d'interface série 42 et 44 de type UART dont l'un, 42, est un circuit d'interface externe interposé entre le modem 32 et le micro-contrôleur 34 et dont l'autre, 44, est un circuit d'interface interne au micro-contrôleur 34 pour sa mise en communication avec l'unité centrale 12.

La borne publique d'accès qui vient d'être décrite fonctionne de la façon suivante.

Dès introduction d'une carte de paiement dans le lecteur 22, détectée au moyen d'un capteur approprié intégré au lecteur, les circuits de téléphonie 26 provoquent, après prise de ligne, la composition du numéro téléphonique d'un centre serveur spécifique raccordé au réseau téléphonique RTC pour l'établissement d'une liaison téléphonique avec ce dernier. Cette liaison est maintenue pendant une durée maximale prédéterminée, pouvant aller jusqu'à une heure, en fonction du type de serveur utilisé. Elle est toutefois maintenue tant que la carte de paiement est introduite dans le lecteur et ce, en fonction d'un crédit d'appel disponible.

Dès que la première impulsion de taxation est reçue en provenance du centre serveur, le micro-contrôleur 34 provoque la commutation du relais 38 de manière à établir une communication entre l'unité centrale 12 et la ligne numérique du réseau téléphonique RNIS.

Il est dès lors possible de naviguer dans ce réseau par l'intermédiaire de cette ligne RNIS en utilisant l'algorithme de navigation stocké en mémoire dans l'unité centrale 12, et en utilisant les organes périphériques 14, 16 et 18.

Dès que la liaison téléphonique avec le centre serveur est rompue, en fin de communication ou dès que la carte de paiement est ôtée du lecteur 22, le relais 38 est à nouveau commuté de manière à le replacer dans son état initial, ce qui a pour effet de déconnecter l'unité centrale 12 de la ligne du réseau RNIS.

On notera par ailleurs que l'algorithme de navigation stocké dans l'unité centrale 12 est adapté pour permettre à l'utilisateur d'accéder soit à des données internes à la borne 10, c'est à dire stockées dans l'unité centrale 12, et ce de façon gracieuse, soit d'accéder à des données par l'intermédiaire du réseau informatique, dès que la commutation du relais 38 a été effectuée c'est à dire dès que l'unité centrale 12 est en communication avec la ligne numérique et ce, de façon onéreuse.

Comme mentionné précédemment, la liaison téléphonique établie entre la borne 10 et le centre serveur est maintenue pendant une période de temps prédéterminée.

Pour ce faire, la borne 10 et le serveur échangent des signaux ayant des fréquences spécifiques de manière à simuler une communication téléphonique et éviter ainsi la rupture de la liaison téléphonique.

En variante, les signaux échangés entre la borne téléphonique 12 et le centre serveur sont utilisés pour transférer des données vers l'unité centrale 12 de manière à permettre leur consultation par l'utilisateur comme mentionné précédemment. Par exemple, ces données sont constituées par des informations publicitaires ou des informations portant sur la zone géographique dans laquelle la borne 10 est située.

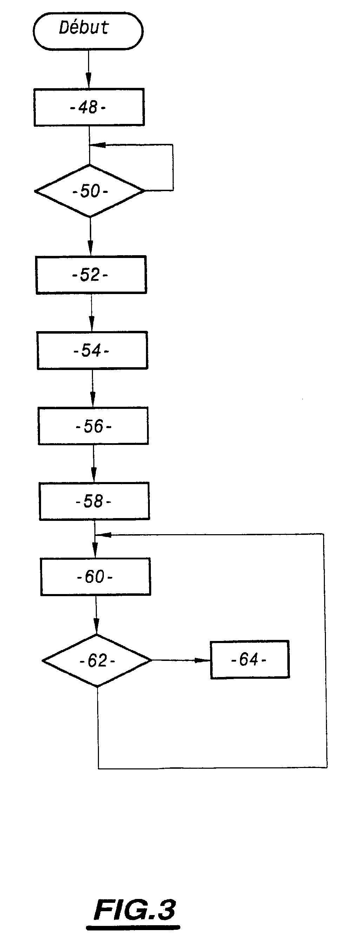

La description précise du fonctionnement de la borne 10 qui vient d'être décrite va maintenant être faite en référence à la figure 3.

Au cours d'une première étape 48 la borne 10 procède à l'activation du modem 32, puis attend des porteuses à 1300 Hertz et 2100 Hertz véhiculées sur le réseau téléphonique analogique RTC (étape 50).

Dès réception des porteuses, la stabilité des porteuses est vérifiée (étape52) et, dans le cas où les porteuses sont stables, un message correspondant est émis en direction de l'unité centrale 12 (étape 54).

Lors de l'étape 56 suivante, les circuits de téléphonie 26 effectuent une prise de ligne et provoquent la composition du numéro téléphonique du centre serveur de manière à établir une liaison téléphonique entre celui-ci et la borne 10.

Lors de l'étape 58 suivante, dès réception d'une impulsion de taxation en provenance du centre serveur, le micro-contrôleur 34 provoque la commutation du relais 38 de manière à établir une communication entre l'unité centrale 12 et la ligne numérique du réseau RNIS.

La procédure se poursuit par une phase de maintien de ligne au cours de laquelle des signaux sont échangés entre le serveur et la borne pour simuler une communication. Cette phase débute par une étape 60 au cours de laquelle une chaîne de caractères est envoyée en direction du serveur. Lors de l'étape 62 suivante, la borne 10 attend une réponse du serveur, et ce pendant une période de temps prédéterminée, par exemple de dix secondes et procède à une vérification de la porteuse.

Dans le cas où aucune réponse n'est reçue ou si la porteuse est perdue, lors de l'étape 64 suivante, un message correspondant est émis en direction de l'unité centrale 12. Le relais 38 est alors désactivé de manière à déconnecter l'unité centrale 12 de la ligne numérique, et la communication téléphonique établie sur la ligne analogique est rompue.

Au contraire, si la porteuse est stable et qu'une réponse est reçue en provenance du serveur, le procédé retourne à l'étape 60 précédente.

Au cours de cette phase de maintien de ligne les impulsions de taxation reçues en provenance du serveur provoquent un prélèvement correspondant d'unités téléphoniques ou un prélèvement sur le compte bancaire de l'utilisateur, en fonction du type de carte utilisé.

De même, au cours de cette phase un traitement secondaire est effectué par l'unité centrale 12 pour la navigation sur le réseau informatique et le traitement des instructions reçues en provenance des organes périphériques.

On notera que l'invention qui vient d'être décrite, qui permet d'accéder à un réseau informatique en utilisant une liaison numérique d'un réseau téléphonique numérique permet un chargement de fichiers et une navigation sur ce réseau selon une vitesse accrue, tout en permettant une taxation du service ainsi fourni, en utilisant une ligne analogique.

L'invention n'est cependant pas limitée au mode de réalisation décrit. En particulier, on notera que le centre serveur utilisé pour la taxation peut être constitué par un serveur vocal, mais, de préférence, on utilise un serveur de type télématique, ou « kiosque », par exemple national ou régional, qui permet le maintien d'une communication pendant une durée accrue et ce avec un coût réduit.

## Revendications

1. Borne publique d'accès à un réseau informatique, du type comportant des moyens (24) de raccordement de la borne à un réseau téléphonique analogique (RTC), une unité centrale (12) dotée d'organes périphériques (14, 16, 18) assurant une interface homme/machine, un algorithme de navigation sur le réseau informatique stocké en mémoire, et un lecteur (22) de cartes de paiement de télécommunications raccordé à des moyens (26) automatiques d'établissement d'une liaison téléphonique avec un centre serveur en fonction d'un crédit d'appel disponible et de maintien de ladite liaison téléphonique, activés tant qu'une carte de paiement est introduite dans le lecteur (22), caractérisée en ce qu'elle est dotée de moyens de raccordement à un réseau numérique (RNIS), comportant un relais (38) piloté par l'unité centrale (12) de manière à établir une communication entre cette dernière et le réseau numérique tant que la liaison téléphonique avec le centre serveur est maintenue.

2. Borne selon la revendication 1, caractérisée en ce que l'unité centrale (12) est raccordée à une carte (30) adaptée pour mettre l'unité centrale (12) en communication avec le réseau numérique (RNIS) et pilotant le relais (38) de manière à établir ladite communication avec le réseau numérique dès réception d'une impulsion de taxation reçue en provenance d'un réseau de téléphonie auquel le centre serveur est raccordé.

3. Borne selon l'une des revendications 1 et 2, caractérisée en ce qu'au cours de la liaison téléphonique entre le centre serveur et la borne (10), ces derniers échangent des signaux de manière à simuler une communication pour maintenir la liaison téléphonique.

4. Borne selon l'une quelconque des revendications 1 à 3, caractérisée en ce qu'elle comporte en outre, stockées en mémoire, des données accessibles gratuitement par un utilisateur.

5. Borne selon la revendication 4, dépendante de la revendication 3, caractérisée en ce que les signaux échangés entre le serveur et la borne (10) constituent des moyens de transfert de données vers la borne pour leur stockage en mémoire.

6. Borne selon l'une des revendications 4 et 5, caractérisée en ce qu'elle comporte en outre des moyens pour piloter directement le relais en l'absence de communication téléphonique établie avec le centre serveur, notamment pour la mise à jour des données stockées dans la borne.

7. Borne selon l'une quelconque des revendications 1 à 6, caractérisée en ce que le centre serveur est un centre serveur de type télématique.
